# FASCICULE DE BREVET EUROPEEN

(11) **EP 0 421 852 B1**
(45) Date de publication et mention de la délivrance du brevet: **26.01.1994**
(21) Numéro de dépôt: 90402702.6
(22) Date de dépôt: 01.10.1990
(51) Int. Cl.: B64F 1/20

(54) **Procédé et installation de guidage en azimuth d'un aeronef en phase d'approche**
Verfahren und Vorrichtung zur azimutalen Führung eines Flugzeuges während der Anflugphase
Method and installation for azimuth guidance of an aircraft during the approach

(30) Priorité: 02.10.1989 FR 8912859
(43) Date de publication de la demande: 10.04.1991
(73) Titulaire: SOCIETE FINANCIERE POUR L'ELECTRONIQUE, F-Paris (FR)
(72) Inventeur: Briatte, Louis Michel, F-75116 Paris (FR)
(74) Mandataire: Hasenrader, Hubert

(56) Documents cités:
- GB-A- 740 061
- GB-A- 793 867
- GB-A- 2 202 980
- US-A- 3 204 218
- US-A- 3 531 765

## Description

La présente invention concerne le domaine de la navigation aérienne.

Elle concerne plus particulièrement un procédé de guidage en azimuth d'un aéronef pendant la phase d'approche à vue et avant atterrissage.

La phase précédant l'atterrissage d'un aéronef est l'une des phases les plus délicates d'un plan de vol et elle nécessite de la part du pilote de l'aéronef une attention soutenue car il doit tenir compte d'un grand nombre de paramètres dont certains peuvent varier rapidement. Il doit maintenir l'aéronef dans le plan vertical contenant l'axe de la piste, quelles que soient la force et la vitesse du vent. Il tient compte de l'image de la piste d'atterrissage telle qu'il la perçoit et cette image se modifie vite durant la phase d'approche et elle peut être incomplète lorsque le temps est brumeux.

GB-A-793 867 représente l'état de la technique le plus proche de la présente invention. Ce brevet propose en effet un dispositif optique de guidage d'aéronef destiné notamment à équiper un porte-avions. Ce dispositif comporte deux groupes de feux alternés et de couleur différente. Les feux sont disposés de telle manière que le pilote voit une barre lumineuse bicolore et symétrique lorsqu'il se trouve dans le plan idéal de vol. Ce système ne donne pas d'indication immédiatement claire sur le sens de la correction éventuelle.

Le but de la présente invention est de proposer un procédé de guidage d'un aéronef, durant la phase d'approche à vue, qui permette au pilote de savoir visuellement et immédiatement si l'aéronef se trouve dans le plan vertical contenant l'axe de la piste, ou si l'aéronef se trouve à droite ou à gauche de ce plan.

Le but est atteint selon l'invention par le fait que le procédé proposé est caractérisé en ce que
on dispose, de chaque côté de la piste d'atterrissage, un ensemble d'au moins trois feux clignotants, lesdits feux étant régulièrement répartis sur une ligne horizontale perpendiculaire à ladite piste et prévus pour éclairer dans une direction sensiblement parallèle à la trajectoire idéale d'approche de l'aéronef de telle manière que, dans chaque ensemble, le feu le plus proche de la piste soit visible dans un premier espace aérien s'étendant de part et d'autre du plan vertical contenant l'axe de la piste et de telle manière que les autres feux dudit ensemble soient visibles uniquement dans un deuxième espace aérien s'étendant du même côté que ledit ensemble par rapport audit plan vertical, et
en ce qu'on fait émettre par lesdits feux des séries d'éclats de telle manière que les deux feux situés de part et d'autre de la piste et les plus proches de celle-ci clignotent en même temps, et de telle manière que les feux d'un ensemble clignotent l'un après l'autre en commençant par le feu le plus éloigné de la piste et en terminant par le ou les feux les plus proches piste.

Grâce au procédé proposé, qui ne nécessite aucune installation particulière à bord de l'aéronef, le pilote sait immédiatement si son aéronef se trouve dans l'axe de la piste, auquel cas il ne voit que deux feux qui clignotent en même temps, ou s'il s'est écarté latéralement par rapport à cet axe. Lorsque l'aéronef se trouve par exemple à gauche du plan vertical contenant l'axe de la piste, le pilote voit les feux de l'ensemble situé à gauche de ce plan qui clignotent successivement, du feu le plus éloigné de la piste vers le feu le plus proche de la piste, l'éclat émis donnant l'impression de se déplacer vers la droit et invitant le pilote à naviguer plus à droite.

La lumière émise par les feux peut être une lumière visible, mais elle peut avantageusement être une lumière infrarouge qui permet d'utiliser le procédé par temps de brume à condition évidemment que le pilote soit équipé de lunettes adéquates.

De façon avantageuse la cadense des éclats lumineux est réglable et l'écartement des feux est également réglable. Il en est de même de l'intensité des éclats émis.

Avantageusement, la direction de l'éclairement des feux par rapport à l'horizontale peut être modifiée.

La présente invention concerne également une installation convenant à la mise en oeuvre du procédé qui comporte deux ensembles d'au moins trois feux clignotants disposés de part et d'autre de la piste d'atterrissage, et un rupteur alimenté par une source de courant et relié électriquement auxdits feux de manière à cadencer les éclats lumineux émis par lesdits feux,
lesdits feux étant régulièrement répartis sur une ligne horizontale perpendiculaire à ladite piste et prévus pour éclairer dans une direction sensiblement parallèle à la trajectoire idéale d'approche de l'aéronef de telle manière que, dans chaque ensemble, le feu le plus proche de la piste soit visible dans un premier espace aérien s'étendant de part et d'autre du plan vertical contenant l'axe de la piste, et de telle manière que les autres feux dudit ensemble soient visibles uniquement dans un deuxième espace aérien s'étendant du même côté que ledit ensemble par rapport audit plan vertical.

Avantageusement, les lampes d'un ensemble sont montées sur un arbre stabilisé par un gyroscope.

L'invention sera mieux comprise à la lecture de la description suivante faite à titre indicatif et en référence au dessin annexé dans lequel :
la figure 1 représente une vue en plan de l'installation de guidage en azimuth pour aéronef,
la figure 2 montre l'image vue par le pilote d'un aéronef aligné dans l'axe de la piste d'atterrissage,
la figure 3 montre l'image vue par le pilote lorsque l'aéronef est trop à droite de l'axe de la piste d'atterrissage, et
la figure 4 montre l'image vue par le pilote lorsque l'aéronef est trop à gauche de l'axe de la piste.

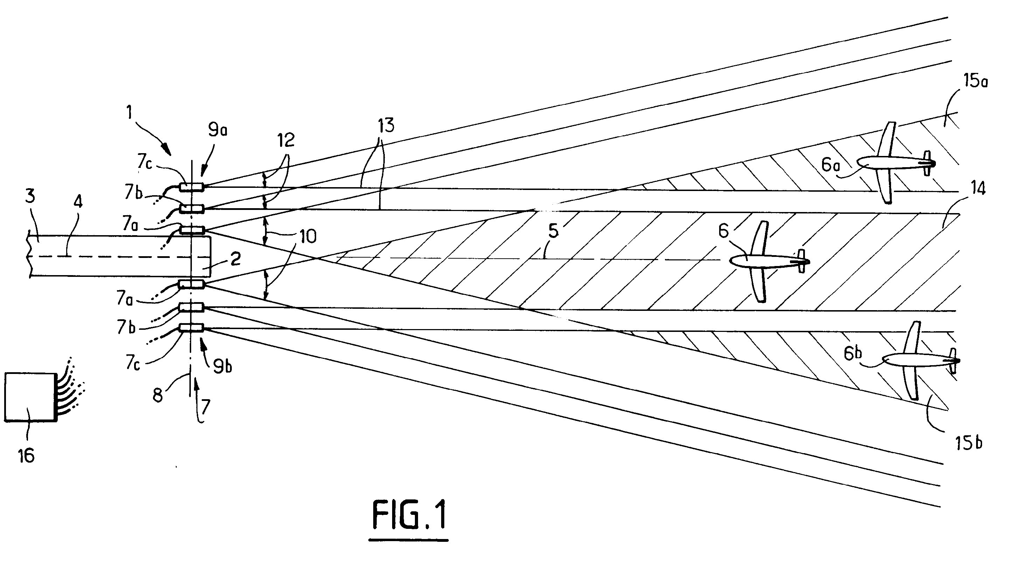

La figure 1 montre une vue en plan de l'installation de guidage en azimuth 1 pour aéronef qui est disposé près de l'extrémité 2 d'une piste d'atterrissage 3. Le plan vertical passant par l'axe 4 de la piste 3 porte la référence 5.

Selon l'invention, l'installation de guidage en azimuth 1 de l'aéronef 6, lequel est montré sur la figure 1 dans l'axe 4 de la piste 3 et dans sa phase d'approche, est constituée de lampes 7 ou feux disposés sur une ligne 8 horizontale et perpendiculaire à l'axe 4 de la piste 3. Les lampes 7 sont réparties en deux ensembles 9a et 9b disposés de chaque côté de la piste 3 et comportant chacun au moins trois lampes 7a, 7b et 7c. La lampe 7a est voisine de la piste 3, et les lampes 7b et 7c sont régulièrement espacées sur la ligne 8 et de plus en plus éloignées de la piste 3.

Les lampes 7 sont disposées de manière à pouvoir éclairer dans une direction sensiblement parallèle à la trajectoire idéale d'approche de l'aéronef 6.

Le faisceau lumineux 10 émis par les lampes 7a voisines de la piste 3 a la forme d'un cône dont l'axe est parallèle à la trajectoire idéale d'approche de l'aéronef 6. Par contre le faisceau lumineux 12 émis par chacune des lampes 7b et 7c éloignées de la piste 3 a la forme d'un demi-cône délimité par un plan 13 parallèle au plan vertical 5 passant par l'axe 4 de la piste 3 et situé de l'autre côté dudit plan 13 par rapport au plan vertical 5.

Grâce à cette disposition des lampes 7, il existe dans le prolongement de l'axe 4 de la piste d'atterrissage, un premier espace aérien 14, délimité par deux plans verticaux disposés de chaque côté de la piste 3, dans lequel le pilote de l'aéronef 6 ne peut voir que les feux des deux lampes 7a les plus proches de la piste 3. De chaque côté de ce premier espace aérien 14, il y a deux deuxièmes espaces aériens 15a et 15b dans chacun desquels le pilote de l'aéronef 6a ou 6b voit les feux émis par les deux lampes 7a et les feux émis par les lampes 7b et 7c de l'un des ensembles de lampes 9a ou 9b suivant l'écart à droite ou à gauche de l'aéronef par rapport au plan vertical 5. Les espaces aériens 14, 15a et 15b sont représentés par des hachures sur la figure 1.

Les lampes 7 émettent successivement des éclats lumineux selon une séquence prédéterminée. Pour ce faire, elles sont reliées à un rupteur 16 qui, dans un cycle de fonctionnement, alimente les lampes des ensembles 9a et 9b dans l'ordre suivant : les lampes 7c puis les lampes intermédiaires 7b et enfin les lampes 7a voisines de la piste 3.

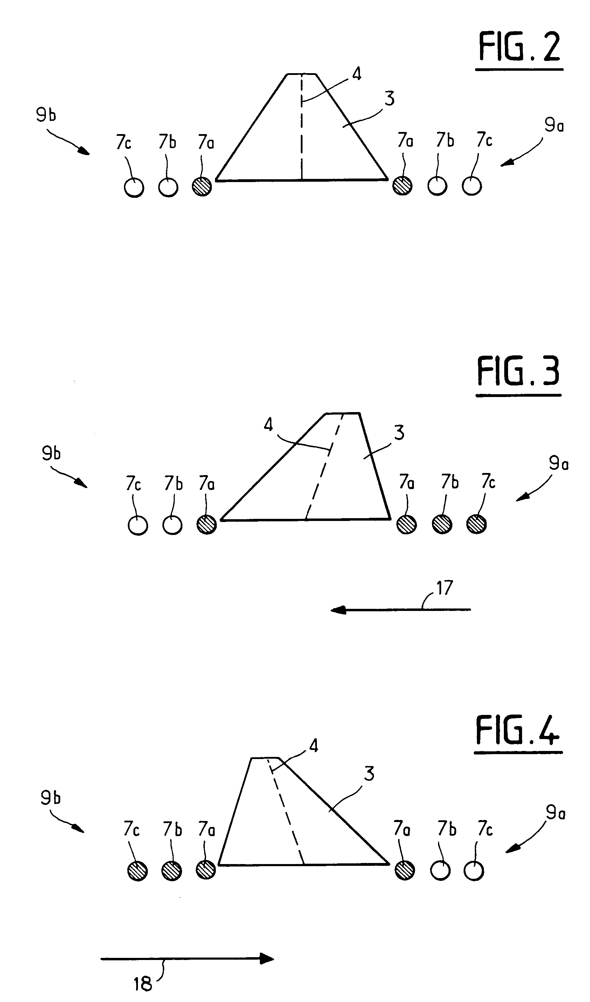

Les lampes 7a les plus proches de l'axe 4 de la piste clignotent ainsi simultanément, et le pilote de l'aéronef 6 qui se trouve dans l'espace aérien 14 voit deux feux qui clignotent en même temps comme ceci est représenté sur la figure 2.

Par contre le pilote de l'aéronef 6a qui se trouve dans l'espace aérien 15a, c'est-à-dire trop à droite du plan vertical 5 contenant l'axe 4 de la piste 3 voit des feux qui clignotent successivement dans le sens représenté par la flèche 17 allant de l'extérieur droit de la piste 3 vers l'axe 4 de la piste 3, comme on peut le voir sur la figure 3. Ces feux clignotants sont émis par les lampes 7c, 7b et 7a du groupe de lampes 9a.

La figure 4 montre la direction 18 des éclats successifs émis par les lampes 7c, 7b et 7a du groupe de lampe 9b et vus par le pilote de l'aéronef 6b qui se trouve trop à gauche du plan vertical 5.

La puissance des éclats émis par les lampes 7 peut être réglée en fonction des conditions météorologiques. De même, les lampes 7 peuvent être montées sur un arbre stabilisé qui permet de modifier la direction de l'éclairement des feux par rapport à l'horizontale, et l'écartement de deux lampes voisines peut être modifié. La cadence des éclats est également réglable.

Lorsque l'installation est faite sur un aérodrome déjà muni d'équipements de balisage lumineux, le dispositif peut alors être intégré soit au niveau des feux d'identification du seuil de piste qui sont alors remplacés ou complétés par les feux 7a, soit au niveau des feux de barres de flancs existants qui sont remplacés complètement ou en partie par l'ensemble des feux du dispositif.

Le même dispositif peut être utilisé pour le guidage d'un hélicoptère à l'approche d'un héliport ou d'une zone d'atterrissage quelconque prévue à cet effet. Dans ce cas, les ensembles de lampes 9a et 9b peuvent être placés de part et d'autre du système optique qui définit la trajectoire en site lors de l'atterrissage.

Les lampes 7 comportent de façon connue une source lumineuse, un déflecteur, des diaphragmes et des lentilles. Les lampes 7b et 7c comportent en plus un masque qui permet d'occulter une partie de la lumière normale émise par la lampe 7. La source lumineuse peut émettre de la lumière visible ou de la lumière infrarouge.

L'utilisation du dispositif décrit ci-dessus, ne nécessite aucune installation nouvelle dans les aéronefs, sauf lorsque la lumière émise par les lampes est dans la gamme des infrarouges. Ce nouveau procédé de guidage d'un aéronef dans sa phase d'approche est de plus très précis. Lorsque les lampes 7 sont distantes de dix mètres par exemple, le sens du défilement apparent des éclats émis par les lampes 7a, 7b et 7c d'un groupe de lampes 9a ou 9b est perceptible au-delà de cinq kilomètres. L'ouverture angulaire des faisceaux lumineux 10 peut être voisine de 30° et celle des faisceaux lumineux 12 peut être de 15°. Cette ouverture peut avantageusement être réglable.

Dans ce qui vient d'être décrit, chaque ensemble de lampes 9a ou 9b ne comporte que trois lampes 7a, 7b et 7c. Le nombre de lampes 7 de chaque groupe peut être évidemment supérieur à trois.

## Revendications

1. Procédé de guidage en azimuth d'un aéronef pendant la phase d'approche à vue et avant atterrissage, caractérisé en ce que
on dispose, de chaque côté de la piste d'atterrissage (3), un ensemble (9a, 9b) d'au moins trois feux (7a, 7b, 7c) clignotants, lesdits feux étant régulièrement répartis sur une ligne horizontale (8) perpendiculaire à ladite piste (3) et prévus pour éclairer dans une direction sensiblement parallèle à la trajectoire idéale d'approche de l'aéronef (6) de telle manière que, dans chaque ensemble (9a, 9b), le feu (7a) le plus proche de la piste (3) soit visible dans un premier espace aérien (14) s'étendant de part et d'autre du plan vertical (5) contenant l'axe (4) de la piste (3), et de telle manière que les autres feux (7b,7c) dudit ensemble (9a, 9b) soient visibles uniquement dans un deuxième espace aérien (15a, 15b) s'étendant du même côté que ledit ensemble (9a, 9b) par rapport audit plan vertical (5), et
en ce qu'on fait émettre par lesdits feux (7a, 7b, 7c) des séries d'éclats de telle manière que les deux feux (7a) situés de part et d'autre de la piste (3) et les plus proches de celle-ci clignotent en même temps, et de telle manière que les feux (7a, 7b, 7c) d'un ensemble (9a, 9b) clignotent l'un après l'autre en commençant par le feu (7c) le plus éloigné de la piste (3) et en terminant par le feu (7a) le plus proche de la piste (3).

2. Procédé selon la revendication 1 caractérisé en ce que les feux (7a, 7b, 7c) émettent une lumière visible.

3. Procédé selon la revendication 1 caractérisé en ce que les feux (7a, 7b, 7c) émettent une lumière infrarouge.

4. Procédé selon l'une des revendications 1 à 3, caractérisé en ce qu'on peut régler la cadence des éclats lumineux émis par les feux (7a, 7b, 7c).

5. Procédé selon l'une des revendications 1 à 4, caractérisé en ce qu'on peut régler l'écartement des feux (7a, 7b, 7c).

6. Procédé selon l'une des revendications 1 à 5, caractérisé en ce qu'on peut modifier la direction d'éclairement des feux (7a, 7b, 7c) par rapport à l'horizontale.

7. Installation convenant à la mise en oeuvre du procédé selon l'une des revendications 1 à 6, caractérisée en ce qu'elle comporte deux ensembles (9a, 9b) d'au moins trois feux clignotants (7a, 7b, 7c), disposés de part et d'autre de la piste d'atterrissage (3), et
un rupteur (16) alimenté par une source de courant et relié électriquement auxdits feux (7a, 7b, 7c) de manière à cadencer les éclats lumineux émis par lesdits feux (7a, 7b, 7c), lesdits feux étant régulièrement répartis sur une ligne horizontale (8) perpendiculaire à ladite piste (3) et prévus pour éclairer dans une direction sensiblement parallèle à la trajectoire idéale d'approche de l'aéronef (6) de telle manière que, dans chaque ensemble (9a, 9b), le feu (7a) le plus proche de la piste (3) soit visible dans un premier espace aérien (14) s'étendant de part et d'autre du plan vertical (5) contenant l'axe de la piste, et de telle manière que les autres feux (7b, 7c) dudit ensemble (9a, 9b) soient visibles uniquement dans un deuxième espace aérien (15a, 15b) s'étendant du même côté que ledit ensemble (9a, 9b) par rapport audit plan vertical (5).

8. Installation selon la revendication 7, caractérisée en ce que les lampes (7a, 7b, 7c) sont montées sur un arbre stabilisé.

## Patentansprüche

1. Seitenleitverfahren für ein im Sichtanflug vor der Landung befindliches Luftfahrzeug, dadurch gekennzeichnet, daß man beiderseits der Landebahn (3) jeweils eine Anordnung (9a, 9b), bestehend aus mindestens drei Leuchtfeuern (7a, 7b, 7c), vorsieht, wobei die Feuer gleichmäßig entlang einer senkrecht zu der genannten Landebahn (3) verlaufenden horizontalen Linie (8) verteilt sind und dazu dienen, in einer Richtung im wesentlichen parallel zur idealen Annäherungs-Flugbahn des Luftfahrzeuges (6) zu leuchten derart, daß bei jeder Anordnung (9a, 9b) das der Landebahn (3) nächstliegende Feuer (7a) in einem ersten Luftraum (14) sichtbar ist, der sich beiderseits der die Achse (4) der Landebahn (3) enthaltenden vertikalen Ebene (5) erstreckt, und daß die anderen Feuer (7b, 7c) derselben Anordnung (9a, 9b) nur in einem zweiten Luftraum (15a, 15b) sichtbar sind, der sich auf derselben Seite der vertikalen Ebene (5) erstreckt, auf der sich auch die betreffende Anordnung (9a, 9b) befindet, und daß man die Feuer (7a, 7b, 7c) Leuchtzeichenserien so abgeben läßt, daß die beiden der Landebahn (3) beiderseits am nächsten liegenden Feuer gleichzeitig blinken, während die Feuer (7a, 7b, 7c) einer Anordnung (9a, 9b) nacheinander blinken, beginnend mit dem von der Landebahn (3) am weitesten entfernten Feuer (7c) und endend mit dem Landebahn (3) nächstliegenden Feuer (7a).

2. Verfahren nach Anspruch 1, dadurch gekennzeichnet, daß die Feuer (7a, 7b, 7c) ein sichtbares Licht ausstrahlen.

3. Verfahren nach Anspruch 1, dadurch gekennzeichnet, daß die Feuer (7a, 7b, 7c) ein Infrarotlicht ausstrahlen.

4. Verfahren nach einem der Ansprüche 1 bis 3, dadurch gekennzeichnet, daß die Leuchtzeichenfolge der Feuer (7a, 7b, 7c) regelbar ist.

5. Verfahren nach einem der Ansprüche 1 bis 4, dadurch gekennzeichnet, daß der Abstand der Feuer (7a, 7b, 7c) regelbar ist.

6. Verfahren nach einem der Ansprüche 1 bis 5, dadurch gekennzeichnet, daß die Leuchtrichtung der Feuer (7a, 7b, 7c) relativ zur Horizontalen veränderbar ist.

7. Einrichtung zur Durchführung des Verfahrens nach einem der Ansprüche 1 bis 6, dadurch gekennzeichnet, daß sie zwei Anordnungen (9a, 9b) mit jeweils mindestens drei beiderseits der Landebahn (3) angeordneten Leuchtfeuern (7a, 7b, 7c) und einen von einer Stromquelle gespeisten Schalter (16) umfaßt, der elektrisen mit den Feuern (7a, 7b, 7c) verbunden ist, um eine Leuchtfolge der Leuchtfeuer (7a, 7b, 7c) zu erzeugen, wobei die Feuer gleichmäßig entlang einer senkrecht zu der genannten Landebahn (3) verlaufenden horizontalen Linie (8) verteilt sind und dazu dienen, in einer Richtung im wesentlichen parallel zur idealen Annäherungs-Flugbahn des Luftfahrzeuges (6) zu leuchten derart, daß bei jeder Anordnung (9a, 9b) das der Landebahn (3) nächstliegende Feuer (7a) in einem ersten Luftraum (14) sichtbar ist, der sich beiderseits der die Achse (4) der Landebahn (3) enthaltenden vertikalen Ebene (5) erstreckt, und daß die anderen Feuer (7b, 7c) derselben Anordnung (9a, 9b) nur in einem zweiten Luftraum (15a, 15b) sichtbar sind, der sich auf derselben Seite der vertikalen Ebene (5) erstreckt, auf der sich auch die betreffende Anordnung (9a, 9b) befindet.

8. Einrichtung nach Anspruch 7, dadurch gekennzeichnet, daß die Lampen (7a, 7b, 7c) auf einer stabilisierten Achse montiert sind.

## Claims

1. Method of providing an aircraft with alignment guidance during the visual approach stage and prior to landing, characterized in that
a set (9a, 9b) of at least three flashing lights (7a, 7b, 7c) is disposed on either side of a landing runway (3), said lights being regularly distributed along a horizontal line (8) perpendicular to said runway (3) and being designed to shine in a direction substantially parallel to the ideal approach trajectory for the aircraft (6) in such a manner that in each set (9a, 9b), the light (7a) closest to the runway (3) is visible in a first air space (14) extending on either side of the vertical plane (5) containing the axis (4) of the runway (3), and in such a manner that the other lights (7b, 7c) of said set (9a, 9b) are visible only in a second air space (15a, 15b) extending to the same side of said vertical plane (5) as occupied by said set (9a, 9b), and
in that said lights (7a, 7b, 7c) are caused to emit series of flashes in such a manner that the two lights (7a) situated on either side of the runway (3) and closest thereto flash simultaneously, and in such a manner that the lights (7a, 7b, 7c) of a set (9a, 9b) flash one after another, starting with the light (7c) which is furthest from the runway (3) and finishing with the light (7a) which is closest to the runway (3).

2. Method according to claim 1, characterized in that the lights (7a, 7b, 7c) emit visible light.

3. Method according to claim 1, characterized in that the lights (7a, 7b, 7c) emit infrared light.

4. Method according to one of claims 1 to 3, characterized in that the rate at which flashes of light are emitted by the lights (7a, 7b, 7c) is adjustable.

5. Method according to one of claims 1 to 4, characterized in-that the spacing between the lights (7a, 7b, 7c) is adjustable.

6. Method according to one of claims 1 to 5, characterized in that the beam direction of the lights (7a, 7b, 7c) relative to the horizontal can be modified.

7. Installation for implementing the method according to one of claims 1 to 6, characterized in that it comprises two sets (9a, 9b) of at least three flashing lights (7a, 7b, 7c) disposed on either side of the landing runway (3), and
a switch box (16) powered by a source of electricity and electrically connected to said lights (7a, 7b, 7c) in such a manner as to control the timing of the light flashes emitted by said lights (7a, 7b, 7c), said lights being regularly distributed along a horizontal line (8) perpendicular to said runway (3) and being designed to shine in a direction substantially parallel to the ideal approach trajectory for the aircraft (6) in such a manner that in each set (9a, 9b), the light (7a) closest to the runway (3) is visible in a first air space (14) extending on either side of the vertical plane (5) containing the axis of the runway, and in such a manner that the other lights (7b, 7c) of said set (9a, 9b) are visible only in a second air space (15a, 15b) extending to the same side of said vertical plane (5) as occupied by said set (9a, 9b).

8. Installation according to claim 7, characterized in that the lamp (7a, 7b, 7c) are mounted on a stabilized shaft.
